# EUROPEAN PATENT SPECIFICATION

(11) **EP 1 712 990 B1**
(45) Date of publication and mention of the grant of the patent: **14.09.2011**
(21) Application number: 06001247.3
(22) Date of filing: 20.01.2006
(51) Int. Cl.: G06F 17/30, G06F 9/44

(54) **Intelligent auto-archiving**
Intelligente Autoarchivierung
Archivage intelligent automatique

(30) Priority: 12.04.2005 US 670958 P; 30.06.2005 US 173114
(43) Date of publication of application: 18.10.2006
(73) Proprietor: Broadcom Corporation, Irvine, CA 92617 (US)
(72) Inventor: Ma, Kenneth, Cupertino, CA 95014 (US)
(74) Representative: Jehle, Volker Armin

(56) References cited:
- WO-A-2005/001646
- GB-A- 2 405 495
- US-A- 5 832 522
- US-A1- 2003 004 947
- US-A1- 2003 110 190

## Description

### CROSS-REFERENCE TO RELATED APPLICATIONS/

This application makes reference to and claims priority from United States Provisional Patent Application Serial No. 60/670958 (Attorney Docket No. 16619US01), entitled "INTELLIGENT AUTO-ARCHIVING AND DATA RESTORATION" filed on April 12, 2005.

This application is related to and/or makes reference to United States Application Serial No. 11/049905 (Attorney Docket No. 1 5673US02) filed February 3, 2005.

This application is related to and/or makes reference to United States Application Serial No. 11/049768 (Attorney Docket No. 1 5685US02) filed February 3, 2005.

### FEDERALLY SPONSORED RESEARCH OR DEVELOPMENT

[Not Applicable]
[MICROFICHE/COPYRIGHT REFERENCE]

[Not Applicable]

### BACKGROUND OF THE INVENTION

When the storage capacity of a data computing device reaches a maximum, it becomes necessary to off-load data stored in a data storage device of the data computing device such that the data computing device operates effectively. If the data storage device reaches maximum capacity, it may not be able to provide adequate storage functionality for the data computing device. For example, a user of the data computing device may have difficulty loading and executing one or more applications when the data storage device reaches a maximum capacity. Unfortunately, the user may have to manually generate additional storage space in order to properly load and execute the one or more applications. Such manual intervention may be time consuming for the user.

The limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Aspects of the invention allow a user to perform intelligent auto-archiving. Further aspects of the invention allow a user to perform data swapping between a data computing device and a data storage device. The various aspects are substantially shown and described in connection with at least one of the following figures, as set forth more completely in the claims.
According to an aspect of the invention, a method of automatically archiving one or more data files into a data storage device from a data computing device is provided comprising:
loading a software into said data computing device;
executing said software, said software capable of performing said archiving;
monitoring storage capacity of said data computing device;
selecting said one or more data files for said archiving;
copying said one or more data files from said data computing device to said data storage device; and
deleting said one or more data files after said copying is successfully performed, said selecting, said copying, and said deleting performed when said storage capacity reaches a threshold level, characterized in that the step of selecting said one or more data files selects at least one file larger than an incoming file destined for storage.
Advantageously, said deleting is performed after one or more applications using said one or more data files are terminated or completed.
Advantageously, a localized pointer in said data computing device is used to redirect access to said one or more data files in said data storage device after said archiving is performed. Advantageously, the step of selecting said one or more data files for said archiving further comprises applying a first algorithm for selecting data files for archiving before applying the algorithm selecting a file larger than the incoming file.

Advantageously, the first algorithm selects the least recently used files.

According to an aspect of the invention, a system for providing automated archiving of one or more data files stored in a data computing device is provided comprising:
a data storage device;
a first software resident in said data computing device; and
a first processor in said data computing device, said first processor capable of executing said first software, wherein said executing said first software provides the method steps of
   monitoring storage capacity of said data computing device;
   selecting said one or more data files for said archiving;
   copying said one or more data files from said data computing device to said data storage device; and
   deleting said one or more data files after said copying is successfully performed, said selecting, said copying, and said deleting performed when said storage capacity reaches a threshold level,
   characterized in that
   the step of selecting said one or more data files selects at least one file larger than an incoming filer destined for storage.

Advantageously, the step of selecting said one or more data files for said archiving further comprises
applying a first algorithm for selecting data files for archiving before applying the algorithm selecting a file larger than the incoming file.

Advantageously, the first algorithm selects the least recently used files.

Document WO-A-2005/001646 constitutes the closest prior art to the invention. The preamble of the independent claims reflects the features as disclosed in said document.

These and other advantages, aspects, and novel features of the present invention, as well as details of illustrated embodiments, thereof, will be more fully understood from the following description and drawings.

### BRIEF DESCRIPTION OF THE DRAWINGS

Figure 1 illustrates a block diagram of a typical system incorporating the use of a data storage device for performing intelligent auto-archiving, in accordance with an embodiment of the invention.

Figure 2 is a block diagram of a data storage device that is used to store data that is archived from one or more data computing devices, in accordance with an embodiment of the invention.

Figure 3 is an operational flow diagram illustrating a method of performing intelligent automated archiving of data, from a data computing device into a data storage device, in accordance with an embodiment of the invention.

Figure 4 is an operational flow diagram illustrating a method of employing one or more intelligent algorithms by way of using an intelligent auto-archiving software (IAAS), in accordance with an embodiment of the invention.

Figure 5 is an operational flow diagram illustrating a method of swapping a data file between a data computing device and a data storage device, in accordance with an embodiment of the invention.

### DETAILED DESCRIPTION OF THE INVENTION

Various aspects of the invention provide at least a system and method of performing intelligent, automated data archiving of data from a data computing device. Data is archived into a data storage device when the available storage in the data computing device reaches a certain threshold, for example. Additionally, various aspects of the invention provide at least a system and method of performing data swapping of one or more data files between the data computing device and a data storage device. The data computing device may comprise a personal computer (PC) or server, for example. In a representative embodiment, the data computing device uses or runs Microsoft Media Center Edition 2005 (MCE 2005). When using MCE 2005, one or more functions related to performing the intelligent, automated data archiving or data swapping may be executed by way of using a controller such as an MCE 2005 infrared (IR) or radio frequency (RF) remote controller. Further, the data computing device may run other operating systems such as Microsoft Windows XP Professional, Microsoft Windows XP Home, Linux, and the like. When using the MCE 2005 operating system, the data computing device, operating as a media computing device, may execute one or more media applications. A media application may comprise performing one or more personal video recording (PVR) functions, for example. The data computing device may interface with a display or a media receiver. The media receiver may process the media for output into a display device or an audio receiver, for example. The data computing device may archive data into a data storage device as determined by one or more intelligent algorithms, in accordance with various aspects of the invention. The data computing device may comprise a set-top-box employing a personal video recorder (PVR), for example. The set-top-box with PVR may perform automated data archiving of multimedia content into the data storage device. The data storage device may comprise one or more data storage drives that may be used to store the data that is archived. The one or more data storage drives may comprise one or more hard disk drives, for example. In a representative embodiment, the data storage device is capable of storage expansion by way of accommodating one or more additional data storage drives. The data storage device may be communicatively coupled to one or more data computing devices, such that auto-archiving may be performed by the one or more data computing devices. The one or more data computing devices and the data storage device may reside within a network. A switching device, such as a router, may be used to route data packets between the one or more computing devices and the data storage device. Because it is connected to a data network, the aforementioned data storage device may be termed or alternatively referred to as a network attached storage device (NAS). The data storage device may act as a central depository for any data that is archived by the one or more data computing devices. The one or more data computing devices may store and execute one or more intelligent algorithms for performing the intelligent auto-archiving. The one or more intelligent algorithms may be used to determine when auto-archiving may occur. The one or more intelligent algorithms may monitor one or more factors or conditions prior to initiating data archiving.

Various aspects of the invention allow a data computing device to perform a swapping of one or more previously archived data files (i.e., the archived data files reside in a data storage device, such as a NAS). This type of "data swapping" may occur when the capacity of the local drive in the data computing device cannot accommodate a requested data file, for example. One or more appropriately sized file(s) may be selected from the data computing device, for swapping with the requested data file, such that the requested data file may be successfully retrieved. For example, a user may wish to obtain a 10 Gbyte data file from the data storage device. If the data computing device has only 4 Gbyte of storage available, the data computing device may select a data file that exceeds 6 Gbyte in size, such as a 7 Gbyte data file, for example. The "data swapping" may be performed using one or more algorithms. For example, the one or more algorithms may comprise a "big-file-goes-first" (BFGF) algorithm, in which, the file swapped or transferred to the data storage device is the largest of the data files currently stored in the data computing device. The one or more algorithms may comprise a "least recently used" algorithm, in which, the data file that is least recently used is selected for swapping with the requested 10 Gbyte file, for example. If the data file chosen is not sufficiently large enough to accommodate a swap, one or more additional data files may be used to facilitate the swap. A "data swapping" algorithm chosen may be based on a user's preferences. The user may preset or preprogram the preferences using a user interface. The one or more algorithms may operate transparently in the background of an operating system while one or more applications are executed. The user may utilize a graphical user interface that allows him to "point and click", using a mouse, for example, in order to perform such "data swapping".

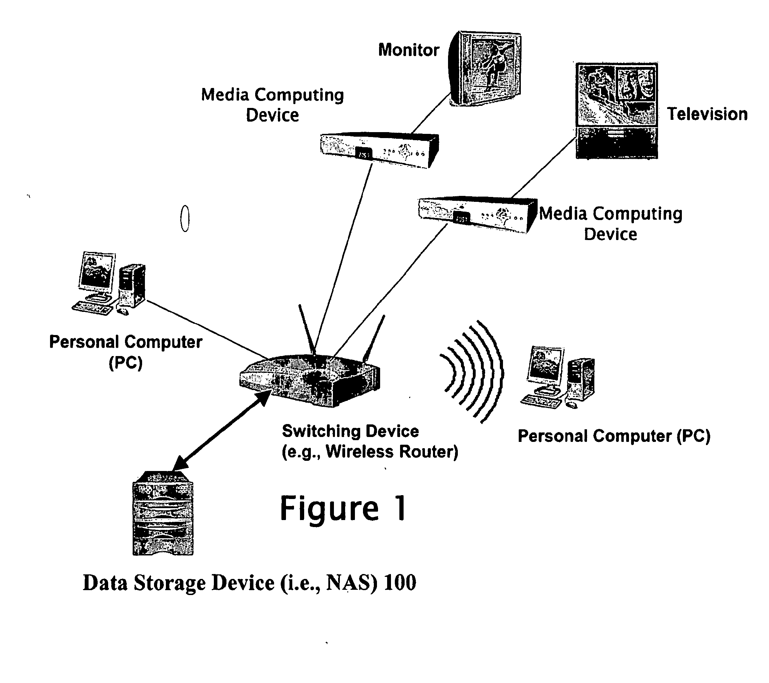

Figure 1 illustrates a block diagram of a typical system incorporating the use of a data storage device 100 (i.e., a NAS), for performing intelligent auto-archiving, in accordance with an embodiment of the invention. The data storage device 100 provides data storage for auto-archiving, of one or more data computing devices. As illustrated, an exemplary switching device provides connectivity of the data storage device 100 to the one or more data computing devices. The switching device, such as a wireless router, may be capable of providing connectivity when performing data archiving, by way of using wireless or wireline communications. For example, the switching device may utilize any one of the following wireless or wireline data communications protocols: 10/100 Ethernet, gigabit Ethernet, 802.11x, Bluetooth, and the like. As illustrated, the one or more data computing devices may comprise one or more personal computers (PC)s or media computing devices, for example. The media computing devices, as illustrated, are connected to a television or a monitor capable of playing multimedia content. The data storage device 100 may provide a centralized facility for archiving data from the one or more data computing devices. Intelligent automated data archiving, and/or "data swapping", as discussed, may be implemented by way of running or executing an intelligent auto-archiving software (IAAS). The IAAS may be stored in memory or storage of the one or more data computing devices. For example, IAAS may be stored in a local hard disk drive of each of the one or more data computing devices. For example, IAAS may be stored in a memory of each of the one or more data computing devices. The memory may comprise a nonvolatile memory, such as a flash memory, for example. The aforementioned one or more intelligent algorithms may be implemented by way of using the IAAS resident in each of the one or more data computing devices. The IAAS may be loaded when each of the one or more data computing devices is booted up, for example. A processor resident within a data computing device may be used to execute the IAAS when each of the one or more data computing devices is booted up, for example. The IAAS may comprise a software program such as an applet that is executed in a Microsoft Windows operating system. The applet may be automatically loaded at boot time or invoked by way of a user inputting one or more commands by way of a graphical user interface.

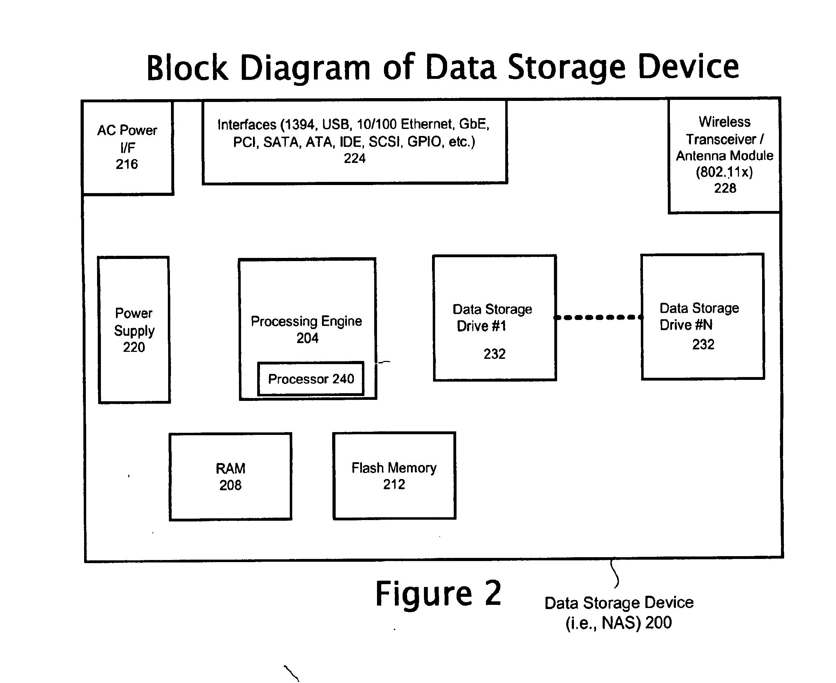

Figure 2 is a block diagram of a data storage device 200 (i.e., a NAS) that is used to store data that is archived from one or more data computing devices, in accordance with an embodiment of the invention. As illustrated, the data storage device may comprise a processing engine 204 that utilizes a processor 240, a random access memory 208, a flash memory 212, an AC power interface 216, a power supply 220, one or more interfaces 224, a wireless transceiver /antenna module 228, and one or more data storage drives (such as one or more hard disk drives) 232. The one or more interfaces 224 may comprise, for example, the following interfaces: IEEE 1394, USB, 10/100 Ethernet, gigabit Ethernet, PCI, SATA, ATA, IDE, SCSI, GPIO, etc.. The wireless transceiver /antenna module 228 may comprise an attachable module or mini-PCI card that may be optionally connected or attached to the data storage device 200. The wireless transceiver/antennae module 228 may provide wireless communication between the data storage device 200 and the one or more data computing devices. The AC power interface 216 and power supply 220 may be used for providing power to the data storage device 200. The one or more data storage drives 232 may comprise any number of hard drives depending on the data storage requirements of the one or more data computing devices in the network. The random access memory 208 and flash memory 212 may be used for storing and executing one or more software. The processor 240 may be used for executing the one or more software resident in the flash memory 212, for example.

In accordance with one or more aspects of the present invention, the data storage device 200 may execute a software (or firmware) resident in the flash memory 212, or in the one or more data storage drives 232. The software resident in the flash memory 212 may be used in conjunction with the previously mentioned IAAS. The software resident in the flash memory 212 may be referred to as a data storage version of the (IAAS). The data storage version of the IAAS may be termed or referred to as an IAASDSD (intelligent auto-archiving software in a data storage device). The execution may be controlled and monitored by way of a data computing device, such as a personal computer (PC) that is communicatively coupled to the data storage device 200. The IAASDSD may be installed separately or downloaded into the flash memory 212 by way of control provided by, for example, the PC or another data computing device. In a representative embodiment, the processor 240 is implemented within the processing engine 204. The processing engine 204 may perform one or more other digital signal processing functions. The IAASDSD may comprise a software program such as a daemon, in an exemplary Linux operating system. The daemon may be invoked when the data storage device boots or when the IAAS on one or more data computing devices is executed, for example.

In accordance with various aspects of the invention, the IAASDSD may be used for intelligently monitoring the available storage capacity within the data storage device or NAS. If for example, the NAS is near full or maximum storage capacity (i.e., there is little unused space available), the IAASDSD may alert a user by way of communicating to a user's data computing device or PC. In a representative embodiment, one or more graphical user interfaces may be provided to the user, such that one or more options may be input and selected by the user. A first option may comprise deleting files in the NAS based on the creation date of the file, for example. A second option may comprise deleting files stored in the NAS based on when a file was last used by a user, for example. A third option may comprise deleting files based on how frequent a file is used, for example. For example, the third option may invoke an algorithm that assesses the number of times a file is accessed over a period of time. A fourth option, if permitted, may comprise expanding the current storage capacity of the data storage device by way of adding one or more data storage drives. The fourth option, for example, may utilize any one of the disk drive upgrade methods described in United States Application Serial No. 11/049768 (Attorney Docket No. 15685US02) filed February 3, 2005. The IAASDSD may determine that one or more data storage drive interfaces are available for use when the fourth option is presented. A fifth option may comprise deleting one or more data files stored in the NAS based on size of each of the one or more data files. It is contemplated that one or more other options that are based on one or more factors and other criteria may be considered when the IAASDSD is run. The IAASDSD located in a data storage device may run in cooperation with an IAAS located in one or more data computing devices. Executing the IAASDSD in conjunction with the IAAS may provide a method of mapping an archived data file, such that retrieval of an an archived data file is performed transparently. For example, any application that is being executed may efficiently access any necessary data files that have been previously archived. The IAASDSD and IAAS may function cooperatively to facilitate the archiving of any data file into the data storage device. Furthermore, the IAASDSD and IAAS may be executed to facilitate "data swapping" of one or more data files between a data computing device and a data storage device (e.g., NAS). A simplified graphical user interface (GUI) may be presented to a user, such that a filename may be the only item that a user is required to input into the GUI when automatic archiving is performed. Further, a shortcut or localized pointer may be automatically created for one or more software applications that rely on an archived data file. As a consequence, the localized pointer may redirect an application that relies on using the archived data file, to the archived location in the data storage device. Hence, one or more applications may be subsequently operated seamlessly, requiring little, if any, user intervention.

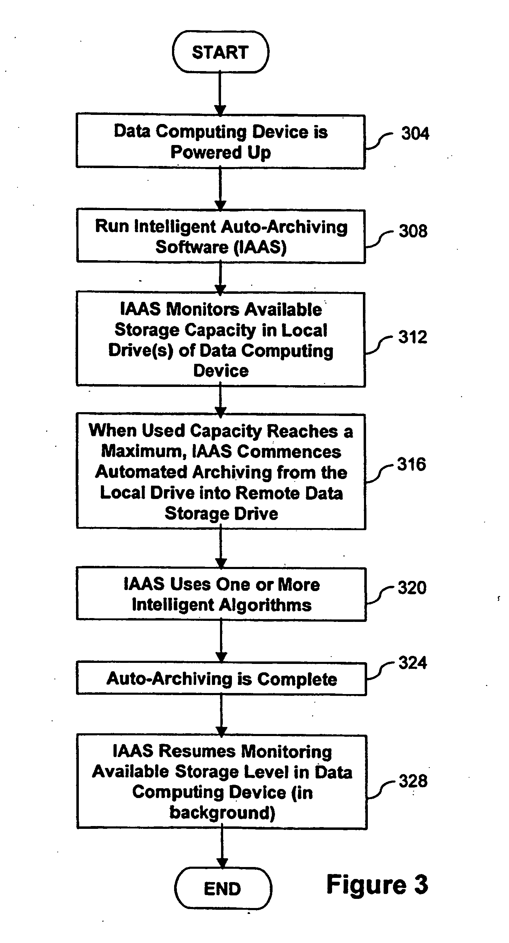

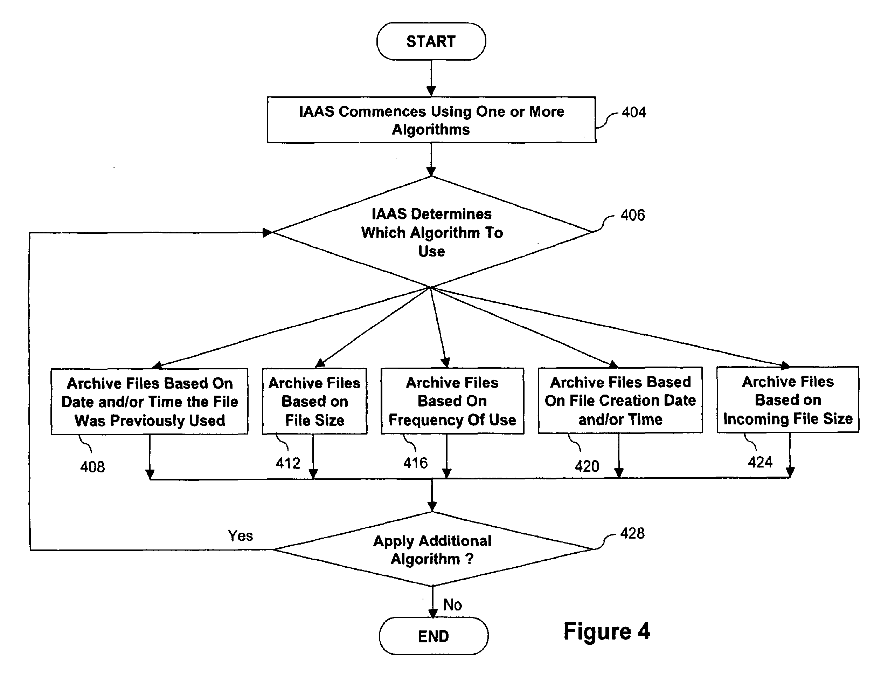

Figure 3 is an operational flow diagram illustrating a method of performing intelligent automated archiving of data, from a data computing device into a data storage device, in accordance with an embodiment of the invention. At step 304, a data computing device is powered up or booted up. The data computing device comprises one or more data storage drives which stores an intelligent auto-archiving software (IAAS). At step 308, the IAAS is loaded during the boot-up process such that the IAAS operates in the background transparently, without being noticed by a PC user. Automatic loading of the IAAS may be controlled and configured by a user such as an administrator. At step 312, the IAAS monitors storage capacity provided by the one or more data storage drives (e.g.., a hard disk drive or any type of data storage drive). The IAAS may be configured to run as a background application of an operating system (e.g., MCE 2005). Next, at step 316, the IAAS may determine that the available storage has reached a critical point, such as a predetermined threshold level, and as such, may initiate automated archiving of data from a data storage drive of the data computing device into the one or more data storage drives of the data storage device (e.g., NAS). The predetermined threshold level may be adjusted or modified by an administrator or user. The threshold level may be programmed by the user. At step 320, one or more intelligent algorithms are employed for determining what kind of data files are to be archived. Details of the one or more intelligent algorithms employed may be provided using the operational flow diagram referenced in Figure 4. Thereafter, the automated archiving proceeds and the available data storage drive space is increased in the data computing device, as a result. In a representative embodiment, the automated archiving process does not interrupt one or more applications that utilize (or require access) to the data to be archived. As a consequence, additional storage capacity resulting from deleting the data that is archived proceeds only after the one or more applications are terminated or have completed its task(s). In a representative embodiment, the automated archiving process may comprise copying the data from the data computing device to the data storage device while the one or more applications are running. However, the data that is used by the one or more applications may not be deleted from the data computing device until the one or more applications are terminated (or completed). Next, at step 324, archiving is completed when the data storage drive reaches a particular level of available or unused data storage space. When this occurs, the data archiving procedure is completed, and at step 328, the IAAS resumes monitoring the unused or available data storage level in the data computing device's data storage drive. Automated data archiving may resume when the available data storage level reaches the predetermined threshold level.

Figure 4 is an operational flow diagram illustrating a method of employing one or more intelligent algorithms by way of using an intelligent auto-archiving software (IAAS), in accordance with an embodiment of the invention. Automated archiving of one or more files may be prioritized based on the one or more intelligent algorithms. At step 404, the IAAS, when executed by a data computing device, commences using one or more intelligent algorithms after it determines that a data computing device's data storage drive (i.e., local drive) has little or no available space. As a consequence, the IAAS initiates data archiving of one or more files using the one or more intelligent algorithms. The one or more files are archived into a data storage device or NAS, as previously mentioned. Use of the one or more intelligent algorithms may be determined by way of a user or administrator inputting one or more selections using a GUI, for example. At step 406, the IAAS may determine which of the one or more intelligent algorithms will be used. The IAAS may select one or more of the one or more intelligent algorithms for use. The IAAS may determine that one or more data files may be archived based on date that the one or more files were last used, as shown in step 408. For example, the algorithm determines which of the one or more data files were "least recently used" (LRU). In a representative embodiment, the one or more data files selected may be based on a particular cutoff date that is provided by an administrator, for example. For example, any of the one or more data files last used prior to the cutoff date, is archived. As illustrated at step 412, one or more data files may be archived based on file size. Any file size that exceeds a particular threshold, for example, may be marked for archiving. The threshold may be configured by the administrator. In a representative embodiment, the IAAS may first archive the largest files in the data computing device. This algorithm may be referred to as "big-file-goes-first" (BFGF). As shown at step 416, one or more data files may be archived based on frequency of use of a file. For example, a file that is used or accessed a certain number of times over a certain period of time, may be marked for archiving. The administrator may configure the number of times and the period of time, for example. The IAAS may determine that at step 420, one or more data files may be archived based on a file's date of creation, for example. For example, the algorithm used may follow an "oldest-goes-first" (OGF) methodology, in which the file created earliest is archived first. In another instance, a file created prior to a certain date may be marked for archiving. This date may be configured or determined by the administrator. The one or more dates, times, and thresholds, may be input using a GUI that is provided when the IAAS is executed, for example. The IAAS may determine that data archiving is based on a comparison of the incoming file size to the existing files in the data computing device, as indicated at step 424. This type of data archiving algorithm may be termed a "larger-than-incoming-file" (LTIF) algorithm. For example, an incoming data file (or newly received data file) would be compared with all existing files. After the comparisons are made, the largest file would be automatically archived into the data storage device. Next, at step 428, the IAAS, when executed, may determine if one or more algorithms may be further applied in determining the one or more data files to be archived. If an additional algorithm is capable of being applied, then the process may revert back to step 406. For example, the IAAS may utilize the LRU algorithm and subsequently apply the LTIF algorithm. In this instance, the least recently used data file would be initially selected; thereafter, the selected data file is compared against the incoming data file to determine which data file is archived. Otherwise, the process ends. Aspects of the invention may incorporate one or more additional algorithms that are not shown in Figure 4, which may be used as a basis for archiving one or more data files, and as such, the scope of the present invention is not limited by the embodiments provided.

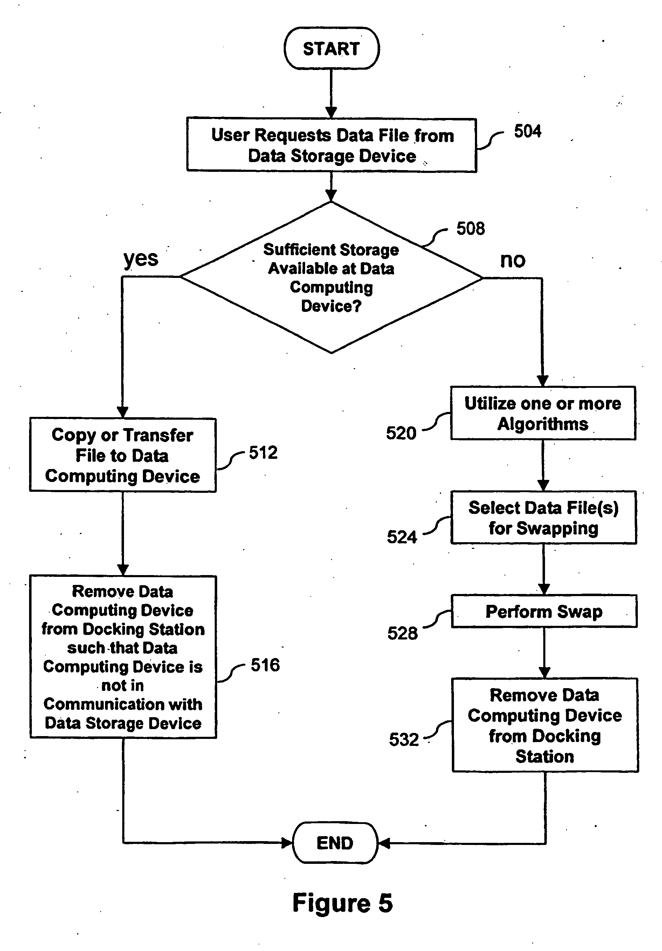

Figure 5 is an operational flow diagram illustrating a method of swapping a data file between a data computing device and a data storage device (or NAS), in accordance with an embodiment of the invention. Aspects of the invention provide a method to swap the data file prior to temporarily terminating data communications between the data computing device the data storage device. For example, a user may wish to swap one or more files prior to removing a notebook computer, from its docking station, prior to departing on a business trip. In this instance, the docking station is used to communicatively couple the notebook computer or data computing device to the data storage device or NAS. The notebook computer and data storage device may communicate by way of a network, such as a local area network, for example. At step 504, a user makes a request for a data file that is stored in the data storage device. The IAAS and/or the IAASDSD may be used to determine the amount of additional storage required at the data computing device, before the swapping may occur. Next, at step 508, the IAAS and/or the IAASDSD software assesses the size of the requested data file and the available storage within the data computing device. If, at step 508, there is sufficient storage available at the data computing device, the process continues with step 512. At step 512, the requested file is copied or transferred over to the data computing device. Then the user disconnects or removes the data computing device from its docking station, at step 516, for example, such that any communication between the notebook computer and the data storage device is temporarily unavailable. Otherwise, at step 520, the data computing device, determines one or more appropriately sized files, by way of using one or more algorithms, such that a file swap may successfully occur. The one or more algorithms may comprise the one or more algorithms previously described in relation to Figure 4, for example. (i.e., LRU, BFGF, OGF, etc.) At step 524, the one or more data files are selected for swapping by using the one or more algorithms. Then, at step 528, the data computing device (running the IAAS and/or IAASDSD) performs a swapping of the requested data file located in the data storage device with the selected data file(s) located in the data computing device. Thereafter, at step 532, the data computing device is disconnected or removed from its docking station, such that the mobile user may depart on his business trip.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method of automatically archiving one or more data files into a data storage device from a data computing device comprising:
loading a software into said data computing device;
executing said software, said software capable of performing said archiving;
monitoring storage capacity of said data computing device;
selecting said one or more data files for said archiving;
copying said one or more data files from said data computing device to said data storage device; and
deleting said one or more data files after said copying is successfully performed, said selecting, said copying, and said deleting performed when said storage capacity reaches a threshold level,
**characterized in that**
the step of selecting said one or more data files selects at least one file larger than an incoming file destined for storage.

2. The method of claim 1 wherein said deleting is performed after one or more applications using said one or more data files are terminated or completed.

3. The method of claim 1 wherein a localized pointer in said data computing device is used to redirect access to said one or more data files in said data storage device after said archiving is performed.

4. The method of any preceding claim, wherein the step of selecting said one or more data files for said archiving further comprises
applying a first algorithm for selecting data files for archiving before applying the algorithm selecting a file larger than the incoming file.

5. The method of claim 4, wherein the first algorithm selects the least recently used files.

6. A system for providing automated archiving of one or more data files stored in a data computing device comprising:
a data storage device;
a first software resident in said data computing device; and
a first processor in said data computing device, said first processor capable of executing said first software, wherein said executing said first software provides the method steps of
monitoring storage capacity of said data computing device;
selecting said one or more data files for said archiving;
copying said one or more data files from said data computing device to said data storage device; and
deleting said one or more data files after said copying is successfully performed, said selecting, said copying, and said deleting performed when said storage capacity reaches a threshold level,
**characterized in that**
the step of selecting said one or more data files selects at least one file larger than an incoming file destined for storage.

7. The system of claim 6, wherein the step of selecting said one or more data files for said archiving further comprises
applying a first algorithm for selecting data files for archiving before applying the algorithm selecting a file larger than the incoming file.

8. The system of claim 7, wherein the first algorithm selects the least recently used files.

## Patentansprüche

1. Verfahren zum automatischen Archivieren einer oder mehrerer Dateien von einer Datenrechnervorrichtung in einer Datenspeichervorrichtung, das umfasst:
Laden einer Software in die Datenrechnervorrichtung;
Ausführen der Software, wobei die Software ausgelegt ist, um das Archivieren durchzuführen;
Überwachen der Speicherkapazität der Datenrechnervorrichtung;
Auswählen der einen oder mehreren Dateien zum Archivieren;
Kopieren der einen oder mehreren Dateien von der Datenrechnervorrichtung in die Datenspeichervorrichtung; und
Löschen der einen oder mehreren Dateien nach dem erfolgreichen Durchführen des Kopierens, wobei das Auswählen, das Kopieren und das Löschen durchgeführt werden, wenn die Speicherkapazität einen Schwellenwert erreicht hat,
**dadurch gekennzeichnet, dass**
der Schritt des Auswählens der einen oder mehreren Dateien wenigstens eine Datei auswählt, die größer ist, als eine zum Speichern bestimmte ankommende Datei.

2. Verfahren nach Anspruch 1, wobei das Löschen durchgeführt wird, nachdem eine oder mehrere Anwendungen, die die eine oder mehreren Dateien verwenden, beendet oder abgeschlossen sind.

3. Verfahren nach Anspruch 1, wobei ein lokalisierter Zeiger in der Datenrechnervorrichtung verwendet wird, um den Zugriff auf die eine oder die mehreren Dateien in der Datenspeichervorrichtung umzuleiten, nachdem das Archivieren durchgeführt ist.

4. Verfahren nach einem der vorhergehenden Ansprüche, wobei der Schritt des Auswählens der einen oder mehreren Dateien zum Archivieren des Weiteren umfasst:
Anwenden eines ersten Algorithmus zum Auswählen von Dateien zum Archivieren vor dem Anwenden des Algorithmus, der eine Datei auswählt, die größer ist, als die ankommende Datei.

5. Verfahren nach Anspruch 4, wobei der erste Algorithmus die jüngst verwendeten Dateien auswählt.

6. System zum Bereitstellen automatischen Archivierens einer oder mehrerer Dateien, die in einer Datenrechnervorrichtung gespeichert sind, das aufweist:
eine Datenspeichervorrichtung;
eine erste Software, die sich in der Datenrechnervorrichtung befindet; und
einen ersten Prozessor in der Datenrechnervorrichtung, wobei der erste Prozessor die erste Software ausführen kann, wobei das Ausführen der ersten Software die folgenden Verfahrensschritte vorsieht:
Überwachen der Speicherkapazität der Datenrechnervorrichtung;
Auswählen der einen oder mehreren Dateien zum Archivieren;
Kopieren der einen oder mehreren Dateien von der Datenrechnervorrichtung in die Datenspeichervorrichtung; und
Löschen der einen oder mehreren Dateien nach dem erfolgreichen Durchführen des Kopierens, wobei das Auswählen, das Kopieren und das Löschen durchgeführt werden, wenn die Speicherkapazität einen Schwellenwert erreicht hat,
**dadurch gekennzeichnet, dass**
der Schritt des Auswählens der einen oder mehreren Dateien wenigstens eine Datei auswählt, die größer ist, als eine zum Speichern bestimmte ankommende Datei.

7. System nach Anspruch 6, wobei der Schritt des Auswählens der einen oder mehreren Dateien zum Archivieren des Weiteren umfasst:
Anwenden eines ersten Algorithmus zum Auswählen von Dateien zum Archivieren vor dem Anwenden des Algorithmus, der eine Datei auswählt, die größer ist, als die ankommende Datei.

8. System nach Anspruch 7, wobei der erste Algorithmus die jüngst verwendeten Dateien auswählt.

## Revendications

1. Procédé d'archivage automatique d'un ou plusieurs fichiers de données dans un dispositif de stockage de données à partir d'un dispositif de calcul de données comprenant :
le chargement d'un logiciel dans ledit dispositif de calcul de données ;
l'exécution dudit logiciel, ledit logiciel apte à effectuer ledit archivage ;
la surveillance de la capacité de stockage dudit dispositif de calcul de données ;
la sélection dudit un ou desdits plusieurs fichiers de données pour ledit archivage ;
la copie dudit un ou desdits plusieurs fichiers de données dudit dispositif de calcul de données dans ledit dispositif de stockage de données ; et
la suppression dudit un ou desdits plusieurs fichiers de données après que ladite copie a été effectuée avec succès, ladite sélection, ladite copie, et ladite suppression effectuées lorsque ladite capacité de stockage atteint un niveau de seuil,
**caractérisé en ce que**
l'étape de sélection dudit un ou desdits plusieurs fichiers de données sélectionne au moins un fichier plus grand qu'un fichier entrant destiné au stockage.

2. Procédé selon la revendication 1, dans lequel ladite suppression est effectuée après qu'une ou plusieurs applications utilisant ledit un ou lesdits plusieurs fichiers de données sont terminées ou menées à bien.

3. Procédé selon la revendication 1, dans lequel un pointeur localisé dans ledit dispositif de calcul de données est utilisé pour rediriger un accès audit un ou auxdits plusieurs fichiers de données dans ledit dispositif de stockage de données après que ledit archivage a été effectué.

4. Procédé selon une quelconque revendication précédente, dans lequel l'étape de sélection dudit un ou desdits plusieurs fichiers de données pour ledit archivage comprend en outre
l'application d'un premier algorithme pour sélectionner des fichiers de données pour archivage avant l'application de l'algorithme sélectionnant un fichier plus grand que le fichier entrant.

5. Procédé selon la revendication 4, dans lequel le premier algorithme sélectionne les fichiers le moins récemment utilisés.

6. Système d'archivage automatisé d'un ou plusieurs fichiers de données stockés dans un dispositif de calcul de données comprenant :
un dispositif de stockage de données ;
un premier logiciel résident dans ledit dispositif de calcul de données ; et
un premier processeur dans ledit dispositif de calcul de données, ledit premier processeur apte à exécuter ledit premier logiciel, dans lequel ladite exécution dudit premier logiciel met en oeuvre les étapes de procédé de
surveillance de la capacité de stockage dudit dispositif de calcul de données ;
sélection dudit un ou desdits plusieurs fichiers de données pour ledit archivage ;
copie dudit un ou desdits plusieurs fichiers de données dudit dispositif de calcul de données dans ledit dispositif de stockage de données ; et
suppression dudit un ou desdits plusieurs fichiers de données après que ladite copie a été effectuée avec succès, ladite sélection, ladite copie et ladite suppression effectuées lorsque ladite capacité de stockage atteint un niveau de seuil,
**caractérisé en ce que**
l'étape de sélection dudit un ou desdits plusieurs fichiers de données sélectionne au moins un fichier plus grand qu'un fichier entrant destiné au stockage.

7. Système selon la revendication 6, dans lequel l'étape de sélection dudit un ou desdits plusieurs fichiers de données pour ledit archivage comprend en outre
l'application d'un premier algorithme pour sélectionner des fichiers de données pour archivage avant l'application de l'algorithme sélectionnant un fichier plus grand que le fichier entrant.

8. Système selon la revendication 7, dans lequel le premier algorithme sélectionne les fichiers le moins récemment utilisés.
